# EUROPÄISCHE PATENTSCHRIFT

(11) **EP 1 363 818 B1**
(45) Veröffentlichungstag und Bekanntmachung des Hinweises auf die Patenterteilung: **14.03.2007**
(21) Anmeldenummer: 02711836.3
(22) Anmeldetag: 06.02.2002
(51) Int. Cl.: B60T 8/36, B60T 13/68, B60T 13/66, B60T 17/22, F15B 21/04, F16K 31/06, F16K 49/00

(54) **VERFAHREN ZUR ANSTEUERUNG EINER BREMSVORRICHTUNG IN EINEM KRAFTFAHRZEUG, SOWIE BREMSVORRICHTUNG**
METHOD FOR CONTROL OF A BRAKING DEVICE ON A MOTOR VEHICLE AND BRAKING DEVICE
PROCEDE DE COMMANDE D'UN DISPOSITIF DE FREINAGE DANS UN VEHICULE AUTOMOBILE ET DISPOSITIF DE FREINAGE

(30) Priorität: 21.02.2001 DE 10108355; 21.12.2001 DE 10163524
(43) Veröffentlichungstag der Anmeldung: 26.11.2003
(73) Patentinhaber: Continental Teves AG & Co. oHG, 60488 Frankfurt (DE)
(72) Erfinder: GRONAU, Ralph, 35083 Wetter (DE); SCHELLER, Tobias, 65931 Frankfurt (DE); REVIOL, Ralf, 63128 Dietzenbach-Steinberg (DE)
(86) Internationale Anmeldenummer: PCT/EP2002/001207
(87) Internationale Veröffentlichungsnummer: WO 2002/066306

(56) Entgegenhaltungen:
- EP-A- 0 933 274
- WO-A-00/55022
- DE-A- 10 059 348
- DE-A- 19 721 549
- GB-A- 1 345 087

## Beschreibung

Die Erfindung bezieht sich auf ein Verfahren zur Ansteuerung einer Bremsvorrichtung in einem Kraftfahrzeug gemäß Oberbegriff von Anspruch 1, sowie auf eine Bremsvorrichtung gemäß Anspruch 14.

Eine hydraulische Bremsanlage in Personenkraftfahrzeugen umfaßt gewöhnlicherweise einen pedalbetätigten Bremsdruckgeber, welcher den erzeugten Druck in einem Druckmittel (z.B. Hydraulikflüssigkeit) über Druckleitungen, aufgeteilt in zwei Bremskreise, zu den Radbremszylindern überträgt. In blockiergeschützten Bremsanlagen wird zur Vermeidung des Blockierens eine Modulation der Radbremsdrücke durch ein elektrohydraulisches Steuergerät vorgenommen. Der hydraulische Teil des Steuergeräts (HCU) enthält hierzu Druckmodulationsventile, wie einem Einlaß- und einem Auslaßventil pro Radbremszylinder, deren Schaltzustände bestimmen, ob den Radbremsen Druckmittel zur Druckabsenkung entnommen oder Druckmittel zur Druckerhöhung zugeführt wird. Weiterhin gehört dazu eine Hydraulikpumpe, die Druckmittel in den Bremskreis fördert, um das für die Modulation der Radbremsdrücke entnommene Druckmittel zu ersetzen. Häufig wird das sogenannte Rückförderprinzip eingesetzt, bei dem die Pumpe als nicht selbstansaugende oder selbstansaugende Rückförderpumpe ausgebildet ist, die das über das offene Auslaßventil und/oder nachgeschaltete Niederdruckspeicher aus den Radbremsen entnommene Druckmittel unmittelbar in den Bremskreis oberhalb des Einlaßventils zurückfördert.

Eine solche blockiergeschützte Fahrzeugbremsanlage mit sogenannter ABS-Funktion kann nun weitergebildet werden zu einer Bremsanlage mit einer Fahrstabilitäts- bzw. einer Antriebsschlupfregelung (ESP- bzw. ASR-Funktion). Bei einer Antriebsschlupfregelung wird in den Radbremsen der angetriebenen Räder ein Druck aufgebaut, wobei das dabei erzeugte Bremsmoment dem Antriebsmoment soweit entgegenwirkt, bis dies auf ein Maß reduziert ist, das in den Aufstandsflächen der angetriebenen Räder abgestützt werden kann. Bei diesem Verfahren wird also das Durchdrehen der Räder beim Anfahren vermieden.

Bei einer Fahrstabilitätsregelung wird an den Rädern des Fahrzeuges ein radindividueller Bremsdruck aufgebaut, so daß durch die dabei erzeugten Bremskräfte ein Moment um die Hochachse des Fahrzeuges erzeugt wird, das einer zu hohen Gierwinkelgeschwindigkeit des Fahrzeugs entgegenwirkt.

Diesen beiden Regelungen sowie einigen anderen nicht genannten Regelungen ist gemein, daß in einzelnen oder allen Radbremsen ein Radbremsdruck erzeugt werden muß, ohne daß eine Pedalbetätigung erfolgt. Diese Bremsungen werden daher im Gegensatz zu den sogenannten Teilbremsungen ohne Fremdkraft als Fremdkraftbremsungen bezeichnet. Bei einer Fremdkraftbremsung müssen in einer Füllphase die Radbremsen mit Druckmittel gefüllt werden, um den gewünschten Bremsdruck zu erzeugen. Um den in den Radbremsen wirkenden Radbremsdruck modulieren zu können, ist für jede Radbremse ein Einlaßventil und ein Auslaßventil vorgesehen. Beide Ventile werden elektromagnetisch über die Ansteuerung von Ventilspulen betätigt, wobei in bekannten Regelungen das Einlaßventil stromlos offen und das Auslaßventil stromlos geschlossen ist. Das Einlaßventil liegt in der Bremsleitung, während das Auslaßventil jeweils die Verbindung zu einem Niederdruckspeicher herstellt. Weiterhin sind über die Ansteuerung von Ventilspulen ein betätigbares Umschaltventil und ein betätigbares Trennventil vorgesehen. Das Trennventil befindet sich in der Bremsleitung, während das Umschaltventil in einer Verbindungsleitung zwischen der Saugseite der Rückförderpumpe und dem Tandem-Hauptzylinder-Vorratsbehälter eingefügt ist.

Zum Aufbau von Bremsdruck wird bei einer Fremdkraftbremsung aus dynamischen Gründen die selbstansaugende Hydraulikpumpe des Regelsystems eingesetzt. Dabei hat sich gezeigt, daß diese Pumpe nicht in allen Fällen in der Lage ist, allein den benötigten Bremsdruck ausreichend schnell aufzubauen.

Bekanntlich ist die Viskosität einer Bremsflüssigkeit oder Hydraulikflüssigkeit in hohen Maße temperaturabhängig. Die hohe Viskosität bei niedriger Flüssigkeitstemperatur in der Startphase eines Kraftfahrzeugs, besonders bei tiefer Außentemperatur, beeinträchtigt den Aufbau des Bremsdruckes einer geregelten hydraulischen Bremsanlage. Dies ist im Rahmen einer Fahrstabilitätsregelfunktion besonders problematisch, da hier die Bremsflüssigkeit besonders schnell von dem Bremsflüssigkeitsreservoir zu einer Radbremse verlagert werden soll. Bei sinkenden Temperaturen steigt die Viskosität der Bremsflüssigkeit überproportional an. Dies führt bei Temperaturen unter -20°C dazu, daß die Bremsflüssigkeit nicht schnell genug angesaugt werden kann, wobei noch hinzukommt, daß mit steigender Viskosität der Druckverlust in der Rohrleitung zunimmt. Diese Hemmnisse führen zu einer zeitlich begrenzten verminderten Funktion der Fahrstabilitätsregelung. Es ist zur Verbesserung der bestehenden Systeme erwünscht, einen schnellen selbsttätigen Bremseneingriff auch bei tiefen Temperaturen zu gewährleisten. Zur Lösung dieses Problems wurden bereits Einrichtungen in der WO 96/20102 (P 7792) vorgeschlagen, die eine Hilfsdruckquelle bzw. eine Vorladepumpe vorsehen. Dies ist allerdings mit erheblichen Mehrkosten verbunden, so daß weiterhin nach Lösungen dieses Problems ohne eine Hilfsdruckquelle gesucht wird.

Eine Möglichkeit zur Lösung dieses Problems wird in der Deutschen Patentanmeldung DE 10059348 angegeben. Gemäß dem dort angegebenen Verfahren wird über einen Wärmeträger die Bremsflüssigkeit auf eine erhöhte, unkritische Temperatur aufgeheizt, indem die vorhandenen, für hydraulische Steuerungsfunktionen nicht notwendigen Ventilspulen, zwecks einer elektrischen Beheizung des diese Spulen aufnehmenden Trägers, welcher insbesondere ein metallischer und massiver Körper (Ventilblock) ist, bewußt für längere Zeiträume, als es für die Regelfunktion notwendig ist und/oder bewußt in Zeiträumen, in denen es für die Regelungsfunktion nicht notwendig ist, elektrisch angesteuert (bestromt) werden.

Die EP-A-0 933 274 betrifft ebenfalls ein hydraulisches Regelsystem für Bremssysteme, bei dem eine Heizmöglichkeit über die Bestromung von Ventilspulen während einer Ventilbetätigung gegeben ist. Das durch die elektronische Regelungseinheit durchgeführte Ansteuerverfahren kann gemäß den Angaben in der Beschreibung auch kurzzeitig und wiederholt erfolgen, jedoch vor allem in der Weise, dass der Ventilaktuator nicht betätigt wird.

Der Erfindung liegt die Aufgabe zugrunde, die Funktion der in der DE 10059348 beschriebenen Bremsanlage so weiterzubilden, daß der Temperaturbereich, innerhalb dem die selbsttätige Bremsfunktion erhalten bleibt, zu tieferen Temperaturen hin zu erweitern, ohne daß der konstruktive mechanische Aufwand der Bremsvorrichtung dadurch erhöht wird.

Diese Aufgabe wird gelöst durch ein Verfahren gemäß Anspruch 1.

Vorteilhafte Weiterbildungen der Erfindung sind in den Unteransprüchen angegeben.

Bekanntlich ist es möglich, den ohmschen Innenwiderstand über eine elektrische Bestromung, z.B. durch längeranhaltendes Öffnen/Schließen, der elektrohydraulischen Ventilspulen so zu nutzen, daß in den Ventilspulen eine merkliche Heizleistung zur Erwärmung der Hydraulikflüssigkeit erzeugt wird kann. Eine Übertragung der Heizenergie von den Spulen auf die Hydraulikflüssigkeit erfolgt im wesentlichen durch Wärmeleitung, aber auch in geringem Maße durch Wärmestrahlung und Wärmekonvektion. Neben einem direkten Wärmefluß auf die Hydraulikflüssigkeit erfolgt der Eintrag von Wärmeenergie im wesentlichen über den sogenannten Ventilblock, in welchen die Ventile eingebettet sind. Infolge der Wärmeleitung und Konvektion wird die Viskosität der aufgeheizten Bremsflüssigkeit bis hinein in die Ansaugleitungen erniedrigt. Die Erwärmung der Bremsflüssigkeit durch das bestromte Ventil erfolgt zum einen statisch bei nicht fließender Bremsflüssigkeit, als auch dynamisch nach dem Prinzip eines Durchlauferhitzers, wenn die Hydraulikflüssigkeit durch das Ventil strömt. Zum Heizen wird nach der Erfindung mindestens eine erste Heizphase durchgeführt, wobei die Heizphase einen ersten Heizimpuls und mindestens einen weiteren Heizimpuls umfaßt.

Zur Variation der eingebrachten Heizleistung können eine, mehrere oder alle im Ventilblock vorhandenen Spulen angesteuert werden. Bevorzugt erfolgt die Variation der Heizleistung in Abhängigkeit vom Fahrzustand des Kraftfahrzeugs, da nicht in allen Fahrzuständen ein Zugriff auf alle Ventilsspulen möglich oder erlaubt ist. So ist es zum Beispiel aus Gründen der Sicherheit gesetzlich vorgeschrieben, daß während der Fahrt immer eine geschlossene hydraulische Verbindung zwischen Radbremszylinder und Hauptbremszylinder aufrechterhalten werden muß.

Vorzugsweise wird bei gepulster oder kontinuierlicher Ansteuerung die Stromstärke zur Ansteuerung der Ventile so gewählt, daß diese groß genug ist, das jeweilige Ventil, wenn es stromlos geschlossen ist, zu öffnen bzw., wenn es stromlos offen ist, zu schließen.
Es ist alternativ möglich, daß die Ventile zum Heizen mit Impulsen einer Stromstärke oder Impulsdauer angesteuert werden, die so gewählt ist, daß das bestromte Ventil mechanisch noch nicht geschaltet wird. Für eine entsprechende Verfahrensweise sind insbesondere solche Ventile nutzbar, die bei einem entsprechend geeigneten Heizströmen nicht in eine Zwischenstellung zwischen geöffnetem und geschlossenem Zustand gehen. Auf diese Weise können auch solche Ventile genutzt, werden, welche immer oder nur in bestimmten Fahrsituationen für eine schaltende Ansteuerung nicht zur Verfügung stehen.

Ein günstiger Zeitpunkt für das Heizen stellt beispielsweise die Fahrsituation unmittelbar nach Inbetriebnahme des Kraftfahrzeuges dar.

Wird während eines vorstehend erwähnten Heizimpulses oder während einer Heizphase, welche aus mehreren Impuls/Pausen-Folgen bestehen kann, die Zündung ausgeschaltet, so wird nach dem Verfahren der Erfindung sichergestellt, daß eine Abkühlphase (Heizpause) von ausreichender Dauer, insbesondere mit einer Dauer von mehreren Minuten, eingehalten wird. Demnach wird kein neuer Heizimpuls oder bzw. eine neue Heizphase begonnen, bevor das betreffende Hydraulikventil eine ausreichende Zeit nicht bestromt wurde. Diese Arbeitsweise vermeidet eine lokale Überhitzung des Hydraulikventils durch zu häufiges aufeinanderfolgendes Heizen oder ein durch Überhitzung verursachtes Sieden der Hydraulikflüssigkeit.

Eine Erkennung einer Fahrsituation, in der das elektronische Umschaltventil oder ggf. weitere nutzbare Ventile angesteuert werden können, kann besonders zweckmäßig durch Abfrage des Bremslichtschalters durch die elektronische Kontrolleinheit bewerkstelligt werden. Ist der Bremslichtschalter betätigt, so wird die Bestromung des oder der zum Heizen eingesetzten Ventile unterbrochen.oder ganz beendet.

Eine Betätigung der Hydraulikventile kann entweder durch eine "Regelung" (umfaßt aktiv oder passiv aufgebauten Bremsdruck), die durch das elektronische Steuergerät verursacht ist, oder durch eine "Normalbremsung", die durch standardmäßiges Betätigen der Bremse durch den Fahrer, d.h. ohne daß eine Blockierschutzregelung aktiviert ist, verursacht sein. Bevorzugt wird das erfindungsgemäße Verfahren in Abhängigkeit von der Art der Regelung ("Regelung" oder "Normalbremsung") gemäß unterschiedlichen Kriterien durchgeführt.

Findet innerhalb einer Heizphase oder eine Heizimpulses eine "Regelung" statt, so wird die aktuelle Heizphase oder der aktuelle Heizimpuls sofort abgebrochen. Zweckmäßigerweise wird, sofern dies aufgrund der aktuellen Blocktemperatur notwendig ist, der momentane Heizimpuls und oder die momentane Heizphase wieder an der Stelle fortgesetzt, an der er/sie unterbrochen wurde. Besonders bevorzugt erfolgt dies dadurch, daß ein zweiter oder weiterer Heizimpuls neu begonnen wird, so daß die Heizphase im wesentlichen fortgesetzt wird. Die Abkühlphase aber ist damit unterbrochen und wird erst nach Ende der Regelung fortgesetzt.

Eine während eines Heizimpulses oder Heizphase auftretende "Normalbremsung" wird vorzugsweise der Abkühlphase (Heizpause) angerechnet, die Heizphase oder der Heizimpuls aber wird unterbrochen und später erforderlichenfalls fortgesetzt.

Es ist außerdem zweckmäßig, wenn während einer Heizphase ständig überprüft wird, ob eine gemessene Temperatur im Ventilblock eine vorgegebene Schwellentemperatur (T_{AUS}) überschreitet. Ist dies der Fall, wird die aktuelle Heizphase sofort abgebrochen.

Nach einer bevorzugten Ausführungsform der Erfindung ist mindestens eine der zu Aufheizzwecken angesteuerten Ventilspulen einem Umschaltventil zugeordnet, das in bestromter bzw. angesteuerter Aufheizfunktion die Saugseite der Hydraulikpumpe mit einem Hydraulikreservoir verbindet (EUV-Ventil). Es ist alternativ möglich, alle vorhandenen Ventilspulen in zum Ansteuern aller Ventilspulen geeigneten Fahrsituationen anzusteuern, sofern diese Verfahrensweise durch das Sicherheitskonzept der Bremsanlage zugelassen ist.

Die gemessene Temperatur wird bevorzugt durch einen oder mehrere Temperatursensoren gemessen und das oder die entsprechenden elektrischen Temperatursignale an ein die Magnetventile bedienendes Steuergerät weitergeleitet. Der bzw. die Temperatursensoren sind zweckmäßigerweise direkt in den Ventilblock eingesetzt. Zur Erhöhung der Betriebssicherheit sind redundante Meßanordnungen für die Temperaturmessung bevorzugt. Es können darüber hinaus zusätzlich auch weitere im Fahrzeug vorhandene Temperaturinformationen genutzt werden. Der Begriff "Temperaturmessung" bezieht sich nicht nur auf das physikalische Abfragen eines entsprechenden Temperatursensors, sondern auch auf das Auslesen einer Speicherstelle, in der ein aktueller Temperaturwert gespeichert ist.

Weiterhin kann es verfahrensmäßig zweckmäßig sein, daß die Regelung des Sollbremsdrucks, welche im Steuergerät durchgeführt wird, in Abhängigkeit von der Temperaturinformation und der durchgeführten Heizschritte in der Weise geändert wird, daß der tatsächlich erreichte Bremsdruck besser mit dem theoretischen Wert über den Bremsdruck übereinstimmt.

Vorzugsweise weisen die Bremskreise eine Schwarzweißbremskreisaufteilung oder eine diagonale Bremskreisaufteilung auf.

Die zu Aufheizzwecken angesteuerten Ventilspulen werden zweckmäßigerweise bei einer üblichen Bremsenbetätigung (Teilbremsung) ohne Regeleingriff des elektrohydraulischen Bremsensteuergerätes für die Dauer der Betätigung von der zu Aufheizzwecken durchgeführten Bestromung ausgeschlossen, da ein Einfluß der mittels der Ventilspulen angesteuerten Ventile auf den Bremsvorgang nicht in jedem Fall ausgeschlossen werden kann.

Die Erfindung schlägt weiterhin eine Bremsvorrichtung für Kraftfahrzeuge vor, welche insbesondere eine hydraulische Bremsanlage ist, bei der eine elektronische Verarbeitungseinheit (Steuergerät) das zuvor beschriebene Verfahren durchführt. Die Durchführung des Verfahrens erfolgt bevorzugt durch Abarbeitung eines Programms in einem oder mehreren Mikrocomputern der Verarbeitungseinheit. Es ist aber auch möglich, daß das Verfahren durch eine mikroelektronische, programmierbare oder festverdrahtete Logik ausgeführt wird.

Das Verfahren nach der Erfindung läßt sich auch in Bremssystemen mit analog ansteuerbaren Ventilen einsetzen, wie z.B. in einem Steuergerät für eine elektrohydraulische Bremsanlage (EHB).

Nachfolgend wird ein Ausführungsbeispiel der Erfindung beschrieben.

Es zeigen
- Fig. 1: eine schematische Darstellung des Verfahrens gemäß der Erfindung mit zwei Heizphasen und
- Fig. 2: ein Diagramm zur Erläuterung der Temperaturverläufe und der Heizimpulse in einer einzelnen Heizphase.

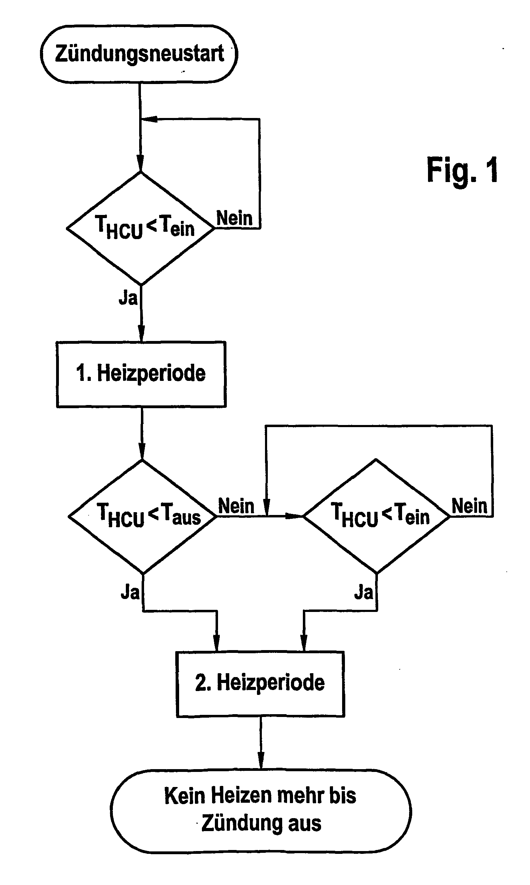

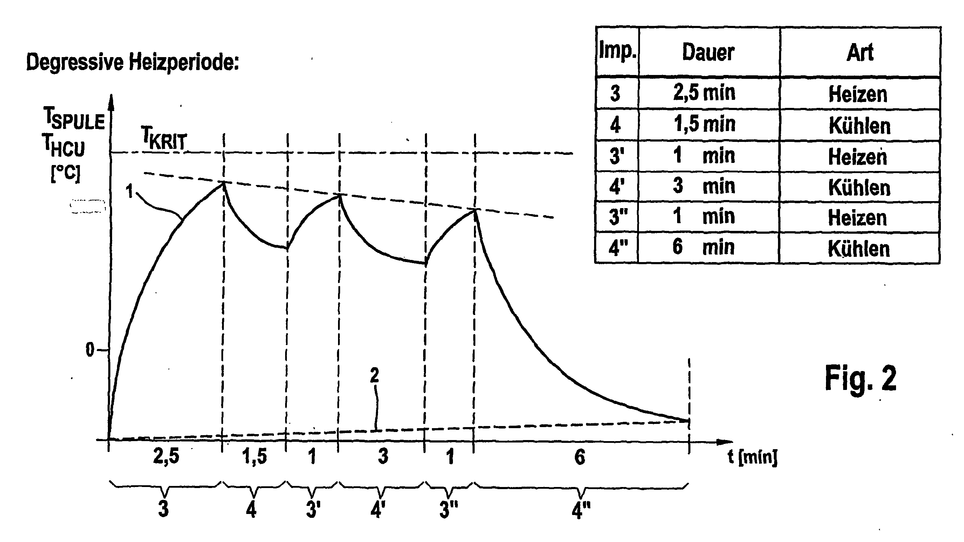

Gemäß Fig. 1 wird nach dem Betätigen der Zündung ein Vergleich zwischen der an einem Temperatursensor im Ventilblock gemessenen Temperatur T_{HCU} im Bereich des Ventilblocks und einer vorgegebenen ersten Schwellentemperatur Tₑᵢₙ durchgeführt. Ist die Temperatur des Ventilblocks kleiner als Tₑᵢₙ, so wird die erste Heizphase mit sechs Heizimpulsen, wie im Zusammenhang mit Fig. 2 erläutert, durchgeführt.

Auf die erste Heizphase folgt ein weiterer Temperaturvergleich zwischen T_{HCU} und einer zweiten Schwellentemperatur Tₐᵤₛ, wobei Tₑᵢₙ < Tₐᵤₛ gilt. Ist die Ventilblocktemperatur T_{HCU} kleiner als Tₐᵤₛ, wird sofort eine zweite Heizphase begonnen, welche bevorzugt dem Heizschema der ersten Heizphase entspricht. Andernfalls wird so lange gewartet, bis die Ventilblocktemperatur T_{HCU} kleiner als die tiefere vorgegebene erste Schwellentemperatur Tₑᵢₙ ist.

Nach Abschluß des zweiten Heizphase wird zweckmäßigerweise keine weitere Heizphase mehr durchgeführt, bis das Fahrzeug abgestellt wird (Signal "Zündung aus").

Die Ansteuerung der Ventilspulen innerhalb der ersten oder der zweiten Heizphase erfolgt nach dem in Fig. 2 dargestellten Impulsschema. Kurve 1 gibt die aktuelle Spulentemperatur T_{SPULE} an, welche im Steuergerät mangels Sensoren in unmittelbarer Nähe der Spule nicht direkt bestimmt werden kann. Wie bereits gesagt, gilt es ein Überschreiten einer kritischen Spulentemperatur T_{KRIT} zu vermeiden. Andernfalls könnte eine Überhitzung der Spulenwicklung eine Beschädigung der Bremsanlage oder eine Überhitzung der Bremsflüssigkeit nach sich ziehen. Kurve 2 gibt den während einer Heizperiode ansteigenden Verlauf der Temperatur eines Temperatursensors im Bereich des Ventilblocks an. Innerhalb der Heizphase werden die Spulen mit einem rechteckförmigen Impulsstrommuster angesteuert. In den Zeitbereichen 3,3',3" wird der Ventilstrom auf maximale Stromstärke (100 %) gebracht. In den zwischen den Heizimpulsen liegenden Heizpausen 4, 4', 4" wird der Spulenstrom abgeschaltet, so daß die Spulen abkühlen können. Den Abschluß der Heizphase bildet eine Heizpause von mehreren Minuten Dauer.

## Patentansprüche

1. Verfahren zur Ansteuerung einer Bremsvorrichtung für Kraftfahrzeuge mit elektrisch ansteuerbaren Hydraulikventilen und einer Hydraulikpumpe, bei dem eine oder mehrere vorhandene, für hydraulische Steuerungsfunktionen notwendige Ventilspulen zwecks einer elektrischen Beheizung eines oder mehrerer, diese Spulen aufnehmender Träger, für längere Zeiträume, als es für die Regelfunktion notwendig ist und/oder in Zeiträumen, in denen es für die Regelungsfunktion nicht notwendig ist, angesteuert werden, **dadurch gekennzeichnet, daß** mindestens eine erste Heizphase durchgeführt wird, wobei die Heizphase einen ersten Heizimpuls (3, 3', 3") gefolgt von einer Heizpause (4, 4', 4") und mindestens einen weiteren Heizimpuls umfaßt, daß bei einer in eine Heizphase bzw. in einen Heizimpuls fallenden Bremsenregelung die aktuelle Heizphase bzw. der aktuelle Heizimpuls abgebrochen wird und daß vor dem Beginn einer zweiten oder weiteren Heizphase nach einem Abbruch in einer Heizphase oder einem Heizimpuls wegen einer Bremsenregelung sichergestellt wird, daß die in der unterbrochenen Heizphase vorgesehene letzte Heizpause vollständig eingehalten wird.

2. Verfahren nach Anspruch 1, **dadurch gekennzeichnet, daß** nach der ersten Heizphase mindestens eine Temperaturmessung durchgeführt wird, wobei insbesondere innerhalb der Heizphasen keine Temperaturmessung durchgeführt wird.

3. Verfahren nach Anspruch 1 oder 2, **dadurch gekennzeichnet, daß** die erste Heizphase unmittelbar nach dem Betätigen der Motorzündung oder dem durch eine Überwachungsvorrichtung festgestellten Betreten des Fahrzeugs durch eine Person begonnen wird.

4. Verfahren nach einem der Ansprüche 1 bis 3, **dadurch gekennzeichnet, daß** die erste Heizphase gestartet wird, wenn die gemessene Temperatur unterhalb einer vorgegebenen Schwellentemperatur liegt.

5. Verfahren nach einem der Ansprüche 1 bis 4, **dadurch gekennzeichnet, daß** die erste oder weitere Heizphase aus fest vorgegebenen aufeinanderfolgenden Heizimpulsen mit einer vorgegebenen Dauer und zwischen den Heizimpulsen liegenden Heizpausen mit einer vorgegebenen Dauer bestehen.

6. Verfahren nach einem der Ansprüche 1 bis 5, **dadurch gekennzeichnet, daß** die Werte für die Dauer der Heizimpulse und/oder die Dauer der Heizpausen für die einzelnen Heizphasen aus einer gespeicherten Tabelle entnommen sind oder diese Werte duch eine Zuordnungsvorschrift in Abhängigkeit von der vor Beginn der Heizphase gemessenenen Temperatur tabellarisch oder funktional ermittelt werden.

7. Verfahren nach einem der Ansprüche 1 bis 6, **dadurch gekennzeichnet, daß** die zweite oder weitere Heizphase erst und nur dann gestartet wird, wenn die durch einen Temperatursensor gemessene Temperatur unterhalb einer vorgegebenen Schwellentemperatur liegt.

8. Verfahren nach einem der Ansprüche 1 bis 7, **dadurch gekennzeichnet, daß** ausschließlich die Ventilspule beheizt wird, welche einem Umschaltventil zugeordnet ist, das in bestromter bzw. angesteuerter Aufheizfunktion die Saugseite der Hydraulikpumpe mit einem Vorratsbehälter verbindet.

9. Verfahren nach einem der Ansprüche 1 bis 8, **dadurch gekennzeichnet, daß** zum Heizen eine oder mehrere Ventilspulen nur eines von zwei Bremskreisen angesteuert werden.

10. Verfahren nach einem oder mehreren der Ansprüche 1 bis 9, **dadurch gekennzeichnet, daß** zur Temperaturmessung Temperaturinformationen eines im Fahrzeug vorhandenen Datenbusses mitgenutzt oder genutzt werden.

11. Verfahren nach einem oder mehreren der Ansprüche 1 bis 10, **dadurch gekennzeichnet, daß** zur Temperaturmessung Meßelemente an zum Bremskreis gehörenden Aggregaten, insbesondere im Träger angeordnete Temperatursensoren, mitgenutzt oder genutzt werden.

12. Verfahren nach einem oder mehreren der Ansprüche 1 bis 11, **dadurch gekennzeichnet, daß** die Ansteuerung der Ventile mit einer Stromstärke erfolgt, die geeignet ist, das jeweilige Ventil wenn es stromlos geschlossen ist zu öffnen bzw. wenn es stromlos geöffnet ist zu schließen.

13. Verfahren nach einem oder mehreren der Ansprüche 1 bis Anspruch 12, **dadurch gekennzeichnet, daß** die Pulslänge und die Stromstärke so gewählt wird, daß das bestromte Ventil mechanisch noch nicht geschaltet wird.

14. Bremsvorrichtung für Kraftfahrzeuge, insbesondere hydraulische Bremsanlage, mit einem Bremsensteuergerät **dadurch gekennzeichnet, daß** in einer elektronischen Verarbeitungseinheit des Bremsensteuergerätes ein Verfahren nach mindestens einem der Ansprüche 1 bis 13 durchgeführt wird.

## Claims

1. Method of actuating a braking device for motor vehicles with electrically actuatable hydraulic valves and a hydraulic pump, wherein one or more existing valve coils that are necessary for hydraulic controlling functions are actuated for the purpose of electrically heating one or more support members accommodating these coils, for longer periods of time than is necessary for the control function and/or in periods in which it is not necessary for the control function,
**characterized in that** at least one first heating period is performed, with the heating period comprising a first heating pulse (3, 3', 3") followed by a heating pause (4, 4', 4") and at least one further heating pulse, **in that** if brake control happens in a heating period or a heating pulse, the current heating period or the current heating pulse will be discontinued, and **in that** before the start of a second or any further heating period after termination it is safeguarded in a heating period or a heating pulse because of brake control that the last heating pause intended in the interrupted heating period is completely maintained.

2. Method as claimed in claim 1,
**characterized in that** after the first heating period at least one temperature measurement is carried out, and no temperature measurement is carried out in particular within the heating periods.

3. Method as claimed in claim 1 or 2,
**characterized in that** the first heating period is started immediately after the engine's ignition is switched on, or after a person has entered the vehicle what is detected by a monitoring device.

4. Method as claimed in any one of claims 1 to 3,
**characterized in that** the first heating period is started when the measured temperature is below a predetermined threshold temperature.

5. Method as claimed in any one of claims 1 to 4,
**characterized in that** the first or any further heating period comprises invariably predetermined consecutive heating pulses of a predetermined duration and heating pauses of a predetermined duration between the heating pulses.

6. Method as claimed in any one of claims 1 to 5,
**characterized in that** the values for the duration of the heating pulses and/or the duration of the heating pauses for the individual heating periods are taken from a stored table, or these values are determined in tabular form or functionally by an allocation specification depending on the temperature measured before the beginning of the heating period.

7. Method as claimed in any one of claims 1 to 6,
**characterized in that** the second or any further heating period is not started before and only if the temperature measured by a temperature sensor lies below a predetermined threshold temperature.

8. Method as claimed in any one of claims 1 to 7,
**characterized in that** exclusively that valve coil is heated that is associated with a change-over valve connecting the suction side of the hydraulic pump to a supply reservoir in the energized or actuated heating function.

9. Method as claimed in any one of claims 1 to 8,
**characterized in that** one or more valve coils of only one of two brake circuits is/are actuated for heating.

10. Method as claimed in any one or more of claims 1 to 9,
**characterized in that** temperature data of a data bus provided in the vehicle are shared in use or used for temperature measurement.

11. Method as claimed in any one or more of claims 1 to 10,
**characterized in that** measuring elements at assemblies pertaining to the brake circuit, especially temperature sensors arranged in the support member, are shared in use or used for temperature measurement.

12. Method as claimed in any one or more of claims 1 to 11,
**characterized in that** the actuation of the valves is effected with a current strength appropriate to open the respective valve when it is normally closed or, respectively, close it when it is normally open.

13. Method as claimed in any one or more of claims 1 to 12,
**characterized in that** the pulse length and the current strength is chosen such that the energized valve is not yet switched mechanically.

14. Braking device for motor vehicles, especially a hydraulic brake system, including a brake control unit,
**characterized in that** a method as claimed in at least any one of claims 1 to 13 is implemented in an electronic processing unit of the brake control unit.

## Revendications

1. Procédé de commande d'un dispositif de freinage pour véhicule automobile comportant des soupapes hydrauliques à commande électrique et une pompe hydraulique, dans lequel une ou plusieurs bobines de soupape existantes, nécessaires pour des fonctions de commande hydraulique sont commandées, pour un chauffage électrique d'un ou de plusieurs supports recevant ces bobines, pendant des laps de temps plus longs que nécessaire pour la fonction de régulation et/ou pendant des laps de temps pendant lesquels ceci n'est pas nécessaire pour la fonction de régulation, **caractérisé en ce qu'**au moins une première phase de chauffage est exécutée, la phase de chauffage comprenant une première impulsion de chauffage (3, 3', 3"), suivie d'une pause de chauffage (4, 4', 4"), et au moins une autre impulsion de chauffage, **en ce que** lors d'une régulation des freins, survenant au cours d'une phase de chauffage ou d'une impulsion de chauffage, la phase de chauffage actuelle ou l'impulsion de chauffage actuelle est interrompue et **en ce qu'**avant le début d'une deuxième ou d'une autre phase de chauffage, après une interruption dans une phase de chauffage ou une impulsion de chauffage à cause d'une régulation des freins, il est assuré que la dernière pause de chauffage prévue dans la phase de chauffage interrompue, est totalement respectée.

2. Procédé selon la revendication 1, **caractérisé en ce qu'**après la première phase de chauffage il est procédé à au moins une mesure de la température, aucune mesure de la température n'étant exécutée en particulier à l'intérieur des phases de chauffage.

3. Procédé selon la revendication 1 ou 2, **caractérisé en ce que** la première phase de chauffage est commencée immédiatement après l'actionnement de l'allumage du moteur ou la montée dans le véhicule d'une personne, constatée par un dispositif de surveillance.

4. Procédé selon l'une des revendications 1 à 3, **caractérisé en ce que** la première phase de chauffage est démarrée lorsque la température mesurée est inférieure à une température de seuil prédéfinie.

5. Procédé selon l'une des revendications 1 à 4, **caractérisé en ce que** la première ou une autre phase de chauffage est constituée d'impulsions de chauffage successives prédéfinies de manière fixe avec une durée prédéfinie et des pauses de chauffage, situées entre les impulsions de chauffage, d'une durée prédéfinie.

6. Procédé selon l'une des revendications 1 à 5, **caractérisé en ce que** les valeurs de la durée des impulsions de chauffage et/ou la durée des pauses de chauffage des différentes phases de chauffage sont prélevées d'un tableau mémorisé, ou ces valeurs sont déterminées, par un tableau ou de manière fonctionnelle, par une règle d'association en fonction de la température mesurée avant le début de la phase de chauffage.

7. Procédé selon l'une des revendications 1 à 6, **caractérisé en ce que** la deuxième ou une autre phase de chauffage n'est démarrée, que lorsque la température, mesurée par une sonde de température, est inférieure à une température de seuil prédéfinie.

8. Procédé selon l'une des revendications 1 à 7, **caractérisé en ce qu'**est chauffée exclusivement la bobine de soupape qui est associée à une soupape de commutation qui, dans une fonction de chauffage parcourue par un courant ou commandée, relie le côté aspiration de la pompe hydraulique à un réservoir.

9. Procédé selon l'une des revendications 1 à 8, **caractérisé en ce que** pour chauffer une ou plusieurs bobines de soupape un seul de deux circuits de freinage est commandé.

10. Procédé selon une ou plusieurs des revendications 1 à 9, **caractérisé en ce que** pour la mesure de la température on utilise seules ou avec d'autres des informations de température d'un bus de données prévu dans le véhicule.

11. Procédé selon une ou plusieurs des revendications 1 à 10, **caractérisé en ce que** pour la mesure de la température on utilise seuls ou avec d'autres des éléments de mesure prévus sur des groupes faisant partie du circuit de freinage, en particulier des sondes de température disposées dans le support.

12. Procédé selon une ou plusieurs des revendications 1 à 11, **caractérisé en ce que** la commande des soupapes s'effectue avec une intensité de courant qui est propre à ouvrir la soupape considérée lorsqu'elle est fermée sans courant ou à la fermer lorsqu'elle est ouverte sans courant.

13. Procédé selon une ou plusieurs des revendications 1 à 12, **caractérisé en ce que** la longueur d'impulsion et l'intensité de courant sont choisies de manière que la soupape parcourue par un courant ne soit pas encore commutée mécaniquement.

14. Dispositif de freinage pour véhicule automobile, en particulier système de freinage hydraulique avec un appareil de commande des freins, **caractérisé en ce que** dans une unité de traitement électronique de l'appareil de commande des freins un procédé selon l'une au moins des revendications 1 à 13 est mis en oeuvre.
